# EUROPEAN PATENT APPLICATION

(11) **EP 1 544 856 A2**
(43) Date of publication of application: **22.06.2005**
(21) Application number: 03104827.5
(22) Date of filing: 19.12.2003
(51) Int. Cl.: G11B 7/24, C09K 11/55, C09K 11/61, C09K 11/71

(54) **Optical memory plate or panel**

(30) Priority: 20.12.2002 EP 02102864
(71) Applicant: AGFA-GEVAERT, 2640 Mortsel (BE)
(72) Inventor: Struye, Luc, 2640 Mortsel (BE); Leblans, Paul, 2640 Mortsel (BE); Lamotte, Johan, 2640 Mortsel (BE)

(57) **Abstract**

An optical memory plate as a data storage optical medium, particularly suitable for identification purposes or protection against forgery and counterfeiting, by providing radiation inscription of data and read-out of thus stored inscription data, as well as a method of recording (with either X-rays or ultraviolet rays) and reading out said data has been disclosed, characterised in that said optical memory comprises a europium doped alkali metal halide storage phosphor layer, substantially free of alkaline earth metals.

## Description

### FIELD OF THE INVENTION

The present invention relates to a heat-resistant, non light-sensitive and non-erasable optical plate, capable of storing its data over a long period of time, to a data storage optical medium and to a method of inscription of data and read-out of said data.

### BACKGROUND OF THE INVENTION

Materials suitable for use as optical memories in computers are the subject of very specific and stringent demands, more particularly with respect to resistance to heat.

Among current optical memory proposals and nonoptical memory designs numerous disadvantages occur, such as high access time, cost of manufacturing of such materials, low storage density, low programming speed, high error rates and high power requirements are common. Additionally loss of data in the memory may occur. Data lost from the memory upon access or as a function of time therefore require undesired "refresh" methods and techniques. So a disadvantage of numerous prior memory systems is that they lose their data upon a loss of power.

For quite a lot of panels, for whatever an application, problems may arise of identification. Sticking a lable e.g. is in most cases not allowed, due to the thickness of the label. Printing of a text is evident neither due to lack for adhesion. Erasure may further occur and loss of data may severe consequences.

### OBJECTS AND SUMMARY OF THE INVENTION

A first object of the present invention is to provide an optical memory which avoids or minimises the disadvantages discussed above.

More specifically it is an object of the present invention to provide a new and improved optical memory having capability to be marked at high data rates with well-known and currently used radiation sources, moreover showing a very good resistance to heat over a long time.

It is a further object to provide a very particular identification of materials, proving thereby authenticity, and protection against forgery of authentic materials.

The above-mentioned advantageous effects have been realised by an optical memory plate providing radiation inscription of data and read-out of thus stored inscription data, characterised in that said optical memory comprises a europium doped alkali metal halide storage phosphor layer, substantially free of alkaline earth metals, in its data recording layer.

Specific features of the said optical memory plate are set out in claim 1 and for preferred embodiments of the invention these particular features are set out in the dependent claims.

Further advantages and embodiments of the present invention will become apparent from the following description.

### DETAILED DESCRIPTION OF THE INVENTION

It has unexpectedly been found that a storage or stimulable phosphor layer, plate or panel wherein said storage phosphor is an alkali metal halide phosphor is very suitable for use as an optical memory, even when treated for a long time at a temperature of 170°C, as could unambiguously be proved by ultraviolet exposure of the said plates or panel. In a preferred embodiment said alkali metal halide phosphor is a CsX:Eu stimulable phosphor, X representing a halide selected from the group consisting of Br and Cl, and even more preferably, said phosphor is a CsBr:Eu stimulable phosphor, substantially free of alkaline earth metals.

CsX:Eu stimulable phosphors, X representing a halide selected from the group consisting of Br and Cl; and more particularly CsBr:Eu phosphors clearly show their capability as a heat-resistant optical memory, depending on the way in which said phosphor layers and panels wherein those phosphor layers act as registering or recording layers have been produced. So the desired optical emission wavelength range for which the layer or panel acts as an optical memory is strongly dependent on the way in which the phosphors have been applied to the phosphor screens or panels.

In case of the preferred CsBr:Eu stimulable phosphors, in one embodiment according to the present invention, a storage phosphor screen or panel acts as an optical memory, wherein said phosphor, present in a layer thereof, is a CsBr:Eu stimulable phosphor, wherein said phosphor is prepared by a method comprising the steps of mixing said CsBr with between 10⁻³ and 5 mol % of a Europium compound selected from the group consisting of EuX'₂, EuX'₃ and EuOX', X' being a member selected from the group consisting of F, Cl, Br and I, preferably Br, firing said mixture at a temperature above 450 °C, cooling said mixture and recovering the CsBr:Eu phosphor, followed by making a lacquer, based on said phosphor, on one or more polymer binders and one or more solvents, coating said lacquer on a substrate and drying a coated layer in order to provide a coated CsBr:Eu phosphor layer as an optical data storage layer of said optical memory plate.

In another very particular embodiment according to the present invention the optical memory plate is provided with a europium doped alkali metal halide phosphor being a CsBr:Eu phosphor, prepared by the method comprising the steps of: mixing said CsBr with between 10⁻³ and 5 mol % of a Europium compound selected from the group consisting of EuX'₂, EuX'₃ and EuOX' (X' being a halide as above, preferably Br); firing said mixture at a temperature above 450 °C ; and wherein said mixture is brought in a condition in order to allow vapour deposition of said mixture on a substrate by a method selected from the group consisting of physical vapour deposition, thermal vapour deposition, chemical vapour deposition, electron beam deposition, radio frequency deposition and pulsed laser deposition, in order to provide a binderless needle-shaped CsBr:Eu phosphor layer as optical data storage layer of said optical memory plate.

In still another embodiment according to the present invention said phosphor precursors are selected from the group consisting of at least one Cs-containing and at least one Eu-containing precursor, and more preferably, are selected from the group consisting of CsBr, EuX₂, EuX₂, EuOX and CsₓEu_{y}X_{x+αy} , wherein x/y > 0.3, wherein α ≥ 2 and wherein X is a halide selected from the group consisting of Cl, Br and I and combinations thereof. For the preparation of CsBr:Eu phosphors it is understood that Br is the major halide, while Cl and I are used in minor amounts.

According to the present invention an optical memory plate providing radiation inscription of data and read-out of thus stored data has thus been realised, characterised in that said optical memory comprises a europium doped alkali metal halide phosphor layer.

In a particularly preferred embodiment the optical memory plate according to the present invention comprises as a europium doped alkali metal halide phosphor, substantially free of alkaline earth metals, a CsBr:Eu phosphor. The term "substantially free of alkaline earth metals" has been used herein as an indication that if it is attempted to prepare BaFBr:Eu films, by growing in needles, problems occur during vaporisation, in that BaFBr desintegrates in BaF₂ and BaBr₂. As a consequence a molar ratio of fluorine to bromine in the vapour-deposited layer deviates from 1. Although a solution to this problem is found by vaporisation of raw materials or precursors from 2 crucibles or boats for the preparation of the dedicated phosphor, in such a manner that the resulting phosphor satisfies the stoichiometric requirements, no comparative properties could be found for use of the phosphor in an optical memory plate as found for the preferred CsBr:Eu phosphor. Satisfying results could not be obtained when preparing a Eu-doped phosphor having a mixed composition of alkaline earth metal halides and alkali metal halides as has e.g. been described in US-A 5,540,859. Opposite thereto outstanding results were obtained using a europium doped alkali metal halide phosphor, substantially free of alkaline earth metals, as the desired CsBr:Eu phosphor.

In one embodiment according to the present invention an optical memory plate has been provided, suitable for radiation inscription with radiation having a wavelength of 400 nm or less.

In a preferred embodiment thereof said optical memory plate according to the present invention is suitable for radiation inscription which proceeds with radiation in the wavelength range from 150 nm up to 300 nm.

In another preferred embodiment said optical memory plate according to the present invention is suitable for radiation inscription which proceeds with radiation in the wavelength range from 300 nm up to 400 nm.

According to the present invention the said optical memory plate is characterised by a lowered fluorescence efficiency in the blue light wavelength range from 400 nm up to 500 nm upon irradiation with ultraviolet radiation.

In another particular embodiment according to the present invention the optical memory plate is provided with a europium doped alkali metal halide phosphor being a CsBr:Eu phosphor, prepared by a method comprising the steps of firing in separate crucibles at a temperature above 450 °C of CsBr and a Europium compound selected from the group consisting of EuX'₂, EuX'₃ and EuOX' (X' being a halide, preferably Br), in amounts of said Europium compound of between 10⁻³ and 5 mol % versus said CsBr, wherein the crucibles are present in the same closed environment in order to allow vapour deposition of said mixture on a substrate by a method selected from the group consisting of physical vapour deposition, thermal vapour deposition, chemical vapour deposition, electron beam deposition, radio frequency deposition and pulsed laser deposition, in order to provide a binderless needle-shaped CsBr:Eu phosphor layer as optical data storage layer of said optical memory plate. According to the present invention that optical memory plate is characterised by a lowered fluorescence efficiency in the red light wavelength range from 550 nm up to 700 nm upon irradiation with ultraviolet radiation.

The data storage optical medium of the present invention comprises an optical memory plate as disclosed above, wherein said optical data storage layer comprising a europium doped alkali metal halide phosphor is coated on a substrate selected from the group consisting of aluminum oxide (Al₂O₃), ultraviolet-enhanced aluminum, anodised aluminum, amorphous carbon, PET, glass, coloured glass, quarz, a ceramic material or a heat-resistant resin.

According to the present invention the data storage optical medium is provided with a thin metal layer or a parylene layer, coated between said substrate and and said optical data storage layer layer comprising a europium doped alkali metal halide phosphor, more preferably a CsBr:Eu phosphor.

Moreover the data storage optical medium according to the present invention is a medium wherein said optical data storage layer is overcoated on top thereof with a protective layer that is transmitting ultraviolet radiation in the wavelength range from 150 to 400 nm. In a preferred embodiment according to the present invention said protective layer is a quartz, a synthetic fused silica, a sapphire or a MgF₂ layer.

According to the present invention said data storage optical medium is a medium suitable for use in the computer industry.

In another embodiment according to the present invention said data storage optical medium is a medium, suitable for use as stimulable or storage phosphor screens or panels in radiographic imaging systems.

In still another embodiment according to the present invention said medium is suitable for use in security industry.

According to the present invention a method of recording data in an optical memory plate comprising a europium doped alkali metal halide phosphor layer is characterised by the step of exposing said plate with a radiation source selected from the group consisting of gas excimer lasers consisting of F₂ (157 nm), ArF (193 nm), KrF (248 nm), XeBr (282 nm) and XeCl (308 nm). In a preferred embodiment in the method according to the present invention, the step of exposing said plate proceeds with a radiation source selected from the group consisting of a mercury vapour lamp at 254 nm, a deuterium lamp, a xenon lamp, a krypton lamp, a quadruplicated - frequency enhanced - Nd:YAG, Nd:YFL or Nd:YVO laser, an Alexandrite laser, a dye laser and a frequency-quadruplicated diode laser.

In a particular embodiment according to the present invention a method of recording data in an optical memory plate even proceeds by the step of exposing said plate with X-rays having an energy in the range of 20 kVp up to 200 kVp with a dose within the range of 1 mGy to 200 mGy.

With respect to the method of reading-out data inscribed in an optical memory plate according to the present invention, read-out of data proceeds with radiation in the same wavelength range as inscription radiation.

In another embodiment the method of reading-out data inscribed in an optical memory plate according to the present invention proceeds with radiation in a longer wavelength range from 550 nm up to 700 nm than inscription radiation.

According to the present invention a method is thus provided of identication and/or protection against forgery of any substrate coatable, at least in part, with a protected layer of a europium doped alkali metal halide phosphor layer, wherein said layer acts as an optical memory plate in a data storage optical medium as set forth in the present invention, wherein inscription of data is provided as explained hereinbefore and wherein read-out is provided by the method as also explained hereinbefore.

Depending on the conditions wherein the preferred binderless needle-shaped CsBr:Eu phosphor optical memory plate has been manufactured a blue emission band occurs, sometimes in combination with a red emission band, which provides an optical effect as desired in order to have an optical memory.

A particularly favourable and desirable effect encountered with respect to the said optical memory is that it cannot be erased by exposure to radiation energy, nor by exposure to heat. This application providing a particularly suitable optical memory is moreover not obtained by photostimulation!

### EXAMPLES

While the present invention will hereinafter be described in connection with preferred embodiments thereof, it will be understood that it is not intended to limit the invention to those embodiments.

Apart from application as an optical storage memory in the computer industry, identification of screens or panels, more in particular stimulable or storage phosphor panels, is envisaged.

As a very particular application identification of needle image storage plates or panels is applied. It is not evident indeed that an identification number is provided to such a plate or panel. Sticking a lable is in most cases not allowed, due to the thickness of the label. Printing of a text is not evident either, due to lack of adhesion. The present invention however provides a method of inscription of data with an ultraviolet laser as by means of the said technique there occurs no damage of the protective layer as data storage proceeds in the phosphor layer as data storage layer. Erasure during erasure procedures, characteristic for storage or stimulable phosphor plates, screens or panels, does moreover not remove inscriptions with the ultraviolet laser. Although the identification inscription cannot be made readable on the image obtained from the energy stored in the storage phosphor particles, it is clear that the identification data are made readable in the presence of a small ultraviolet radiation source.

Only in the case when the storage phosphor shows an emission in the red part or the visible spectrum after ultraviolet irradiation, ability for inscription of red lines, figures, characters and the like, by a red laser is provided.

In order to protect the phosphor from scratches, water and other chemicals a protective layer is added on the top. However this protective layer has to be highly transmittant for the UV light used to irradiate the phosphor. Hereby the protective layer can be made of quartz, a synthetic fused silica as e.g. the materials named "UVGSFS" and "OQSFS", manufactured by MELLES GRIOT, the Netherlands; low expansion borosilicate glass, sapphire or MgF₂. When the topcoat is not tranmitting UV radiation, then the UV light can be allowed to pass through the support layer when this support layer is made of a highly transmittant material.

According to the present invention optical irradiation in order to write or read the memory has been realised by irradiation with radiation sources selected from the group consisting of a mercury vapour lamp (at 254 nm), a deuterium lamp, a xenon lamp and a krypton lamp (all providing selected emission lines in the desired short ultraviolet range between 200 nm and 300 nm), a quadruplicated Nd:YAG laser at 266 nm - making use of the fourth harmonic oscillation -, dye lasers having an ultraviolet emitting dye (such as e.g. BMT - benzene-methanethiol - and PTP - p-Terphenyl C₁₈H₁₄ ), excimer lasers (e.g. those with a gas as F₂ (157 nm), ArF (193 nm), KrF (248 nm), XeBr (282 nm) or XeCl (308 nm), and frequency-enhanced (doubled- or quadruplicated) diode lasers. The quadruplicated Nd:YAG, Nd:YLF and Nd:YVO or an Alexandrite laser can be used.

In a particular experiment in order to test its applicability as an optical memory for X-rays, inscription of data was tested for a CsBr:Eu plate, prepared according to the method of starting from a raw mixture of CsX and Europium compounds as described in the detailed description above. It has been found that for a dose of 25 Röntgen at 120 kV (2.5 mm Al filter) inscription with X-rays occurred. A lower ultraviolet fluorescence efficiency and a lower X-ray sensitivity were obtained, but for the purpose of having an optical memory, this phenomenon was not forming a problem.

A stimulable or storage phosphor layer containing a europium doped alkali metal halide phosphor, coated in form of a layer or coated in a storage phosphor panel and protected against humidity by a suitable protective layer, wherein said protective layer further allows transmission of ultraviolet rays, has thus been shown to be particularly suitable for use as an optical memory plate when exposed to irradiation having a wavelength of less than 400 nm as allowing inscription of data in form a text (including figures and characters) and a bar code, without however being limited thereto, and wherein said data are not erasable and are easily read-out.

Besides marking storage phosphor panels, a method is thus offered by the present invention in order to provide identification (proving authenticity and protecting against forgery) of said panels or of any carrier partially coated with such a protected phosphor layer.

Having described in detail preferred embodiments of the current invention, it will now be apparent to those skilled in the art that numerous modifications can be made therein without departing from the scope of the invention as defined in the appending claims.

## Claims

1. An optical memory plate providing radiation inscription of data and read-out of thus stored inscription data, **characterised in that** said optical memory comprises a europium doped alkali metal halide storage phosphor layer, substantially free of alkaline earth metals.

2. Optical memory plate according to claim 1, wherein said europium doped alkali metal halide phosphor layer, substantially free of alkaline earth metals is a CsBr:Eu phosphor layer.

3. Optical memory plate according to claim 2, wherein said CsBr:Eu phosphor layer is a binderless needle-shaped CsBr:Eu phosphor layer.

4. Optical memory plate according to any one of the claims 1 to 3, wherein said radiation inscription proceeds with radiation having a wavelength of 400 nm or less.

5. Optical memory plate according to any one of the claims 1 to 4, **characterised by** a lowered fluorescence efficiency in the blue light wavelength range from 400 nm up to 500 nm upon irradiation with ultraviolet radiation.

6. Optical memory plate according to any one of the claims 1 to 4, **characterised by** a lowered fluorescence efficiency in the red light wavelength range from 550 nm up to 700 nm upon irradiation with ultraviolet radiation.

7. Method of recording data in an optical memory plate according to any one of the claims 1 to 4, by the step of exposing said plate with a radiation source selected from the group consisting of a mercury vapour lamp at 254 nm, a deuterium lamp, a xenon lamp, a krypton lamp, a quadruplicated - frequency enhanced - Nd:YAG, Nd:YFL or Nd:YVO laser, an Alexandrite laser, a dye laser, a frequency-quadruplicated diode laser and gas excimer lasers consisting of F₂ (157 nm), ArF (193 nm), KrF (248 nm), XeBr (282 nm) or XeCl (308 nm).

8. Method of recording data in an optical memory plate according to any one of the claims 1 to 6, by the step of exposing said plate with X-rays having an energy in the range of 20 kVp up to 200 kVp with a dose within the range of 1 mGy to 200 mGy.

9. Method of reading-out data inscribed in an optical memory plate according to claim 4, wherein read-out of data proceeds with radiation in the same wavelength range as inscription radiation.

10. Method of reading-out data inscribed in an optical memory plate according to claims 4, wherein read-out of data proceeds with radiation in a longer wavelength range from 550 nm up to 700 nm than said inscription radiation.
